(19) Europäisches Patentamt / European Patent Office / Office européen des brevets

(11) **EP 4 195 530 A1**

(12) **DEMANDE DE BREVET EUROPEEN**

(43) Date de publication:
**14.06.2023 Bulletin 2023/24**

(21) Numéro de dépôt: **22211606.3**

(22) Date de dépôt: **06.12.2022**

(51) Classification Internationale des Brevets (IPC):
**H04B 7/185** (2006.01)     **H04W 56/00** (2009.01)

(52) Classification Coopérative des Brevets (CPC):
**H04B 7/1851; H04W 56/004**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **09.12.2021 FR 2113204**

(71) Demandeur: **THALES**
**92400 Courbevoie (FR)**

(72) Inventeurs:
• **ARNAUD, Mathieu**
  **31100 TOULOUSE (FR)**
• **BAUDRY, Benjamin**
  **31100 TOULOUSE (FR)**

(74) Mandataire: **Atout PI Laplace**
**Immeuble "Visium"**
**22, avenue Aristide Briand**
**94117 Arcueil Cedex (FR)**

(54) **PROCÉDÉ DE PRÉ-COMPENSATION D'ÉCARTS TEMPORELS**

(57) L'invention concerne un procédé de compensation d'écarts temporels pour aligner temporellement des trames de service montantes (UE UL) et des trames de service descendantes (UE DL), lesdites trames de service montantes (UE UL) et lesdites trames de service descendantes (UE DL) étant échangées entre un satellite (SAT) et un terminal mobile (UE). Le terminal mobile (UE) appartenant à une cellule 5G comportant un centre de cellule, la pré-compensation est calculée sur la base d'un faisceau principal dirigé vers le centre (O) de ladite cellule (5G).

Figure 1

EP 4 195 530 A1

**Description**

Domaine technique

La présente invention concerne un procédé de pré-compensation d'écarts temporels pour aligner temporellement des trames de service montantes et des trames de service descendantes échangées entre un satellite et un terminal mobile.

Technique antérieure

Les systèmes satellites pour les terminaux mobiles sont aujourd'hui propriétaires et peu ou pas interopérables ni entre les différents systèmes satellites, ni avec les réseaux mobiles terrestres. Les terminaux mobiles et les équipements réseaux existants coutent chers et sont spécifiques. Cela les limite à des marchés de niche et ne leur permet pas de créer une solution pour le marché grand public.

L'organisme de standardisation des réseaux mobiles 3GPP (pour « 3rd Generation Partnership Project » en anglais) tente de répondre à ce problème en proposant des modifications au standard 5G, dit cinquième génération de réseau mobile, pour le rendre compatible d'un point de vue satellite. Des modifications sont alors à prévoir sur l'ensemble des composants du système. Pour cela, une nouvelle version du standard 3GPP est en cours d'élaboration dans la version n°17 pour permettre l'utilisation de la 5G par satellite dans le cadre d'un groupe de travail 3GPP NTN (pour « Non-Terrestrial Networks » en anglais). Cette version prévoit des modifications au niveau des différentes composantes du système de communication. Il est connu qu'un système de communication pour une communication 5G comprend un réseau central (dit « Core Network » en anglais) et au moins une station de base. Dans un système par satellite, le système de communication comprend également au moins une passerelle disposée entre la station de base et le satellite. Le système de communication permet ainsi une communication 5G entre des terminaux mobiles et le réseau central.

Même si des modifications au niveau du standard 3GPP seront faîtes, les terminaux mobiles, le réseau central et la station de base ne sont pas conçus et développées pour des canaux de propagation de type satellitaire ni pour gérer des modifications dynamiques dans la topologie d'un réseau résultant d'une constellation de satellites non-géostationnaires.

Il existe donc un besoin de proposer une solution permettant de minimiser les impacts du support de l'accès 5G par satellite sur la station de base et le terminal mobile pour réutiliser des équipements standards.

Exposé de l'invention

La présente invention vise à remédier au moins en partie à ce besoin.

Plus particulièrement, la présente invention a pour objectif de favoriser l'adoption de l'accès satellite par l'écosystème 3GPP cellulaire.

Pour cela un premier objet de l'invention concerne un procédé de pré-compensation d'écarts temporels pour aligner temporellement des trames de service montantes et des trames de service descendantes, lesdites trames de service montantes et lesdites trames de service descendantes étant échangées entre un satellite et un terminal mobile dans un faisceau principal, ledit terminal mobile étant adapté pour réaliser des communications 5G. Le terminal mobile appartient à une cellule 5G comportant un centre de cellule, et la pré-compensation est calculée sur la base d'un faisceau principal dirigé vers le centre de ladite cellule 5G.

Dans un mode de réalisation particulier, la pré-compensation est réalisée sur les trames de service descendantes et/ou sur les trames de service montantes.

Dans un mode de réalisation particulier, la pré-compensation est calculée à partir d'une position, d'une vitesse et/ou d'une accélération du satellite.

Dans un mode de réalisation particulier, la pré-compensation est une pré-compensation Doppler permettant de compenser des écarts en fréquence.

Dans un mode de réalisation particulier, l'étape de pré-compensation Doppler est calculée à partir d'au moins un paramètre d'une liste de paramètres comprenant :

- une position du satellite ;
- une vitesse du satellite ;
- une accélération du satellite ;
- une fréquence centrale ;
- la position du centre de la cellule.

Un autre objet de l'invention concerne un dispositif de pré-compensation pour la compensation d'écarts temporels pour aligner temporellement des trames de service montantes et des trames de service descendantes. Les trames de service montantes et les trames de service descendantes sont échangées entre un satellite et un terminal mobile. Le terminal mobile est adapté pour réaliser des communications 5G avec le réseau d'accès. Le terminal mobile appartient à une cellule 5G comportant un centre de cellule et la pré-compensation est calculée sur la base d'un faisceau principal dirigé vers le centre de ladite cellule 5G.

Un autre objet de l'invention concerne une charge utile comportant un dispositif de pré-compensation selon l'invention.

Un autre objet de l'invention concerne un système de communication pour une communication 5G entre au moins un terminal mobile et un réseau d'accès comprenant une pluralité de stations de base. Le système de communication comprend au moins un satellite, au moins une station de base de la pluralité de stations de base et une passerelle disposée entre ledit satellite et ladite station de base. Le satellite et la passerelle sont aptes à échanger des trames lien feeder. Le terminal mobile et le satellite sont aptes à échanger des trames de service dans un faisceau principal. Le satellite est à l'interface entre les trames lien feeder et les trames de service pour l'échange de données entre le terminal mobile et la station de base, les dites trames de service comprenant des trames de service montantes et des trames de service descendantes, lesdites trames de service montantes devant être alignées temporellement avec lesdites trames de service descendantes. Le système de communication comporte un dispositif de pré-compensation adapté pour compenser des écarts temporels pour aligner temporellement les trames de service montantes et les trames de service descendantes et dans lequel le terminal mobile appartenant à une cellule 5G comportant un centre de cellule, la pré-compensation est calculée sur la base d'un faisceau principal dirigé vers le centre de la cellule 5G.

De manière connue, la station de base d'un système de communication 5G est composée d'une unité centrale (dite « Central Unit » en anglais), d'une unité distribuée (dite « Distributed Unit » en anglais) pour la bande de base et d'une unité radio (dite « Radio Unit » en anglais). L'unité radio est portée par une charge utile du satellite, tout en permettant de conserver au sol les principales fonctionnalités de la station de base, unité centrale et unité distribuée, en vue d'optimiser le coût global du système. Afin de gérer les délais importants (plusieurs millisecondes) et variables entre l'unité radio et la bande de base au sol résultants de l'intégration de l'unité radio dans le satellite, il est prévu un mécanisme de compensation pour compenser les écarts temporels dans l'échange des trames lien feeder. Ce mécanisme autorise un masquage desdits écarts temporels vis-à-vis du terminal mobile, qui n'a pas alors besoin de compenser directement ces écarts. Dans le standard 3GPP 5G, le point de référence d'interface 5G est un point où les trames de service montantes sont alignées temporellement avec les trames de service descendantes dans un système à division duplex en fréquence (dit « FDD » en anglais). En outre, l'alignement des trames dans le sens montant entre les différents terminaux d'une cellule 5G est nécessaire pour éviter les interférences entre eux. Dans le standard 3GPP, de façon à respecter l'alignement au niveau du point de référence temporel d'interface 5G, le terminal mobile doit appliquer une anticipation (dite « Timing advance » en anglais) sur l'émission dans le sens montant. Cette anticipation est pilotée et corrigée par la station de base, en fonction de la dérive mesurée par ladite station de base sur la réception de trames, de façon à compenser un délai aller-retour (dit « Round-Trip Delay » en anglais) entre le terminal mobile et le point de référence temporel d'interface 5G. Dans un système 5G terrestre, le point de référence est situé au niveau d'une antenne de la station de base donc très proche de la bande de base, ce qui permet de négliger le délai de propagation entre les deux. Dans un tel système 5G terrestre, avoir un point de référence autre qu'au niveau de la station de base (au sol) impliquerait que cette station de base prenne en compte dynamiquement le délai entre ce point de référence et la station de base au moment de planifier (ou « scheduling » en anglais) les trames. Cette planification est typiquement à faire toutes les millisecondes. Dans un système satellite, il faut donc à la fois connaître le délai sur le lien feeder entre la passerelle et le satellite, basé sur la connaissance de la position actuelle du satellite et de la station de base ou bien en effectuant une mesure du délai de transport sur le lien, tout en étant capable d'adapter la planification en fonction du délai réel, ce qui peut être complexe à mettre en œuvre.

La présente invention sera mieux comprise à la lecture de la description détaillée de modes de réalisation pris à titre d'exemples nullement limitatifs et illustrés par les dessins annexés sur lesquels :

[Fig 1] la figure 1 illustre un système de communication selon l'invention pour une communication 5G entre au moins un terminal mobile et un réseau d'accès via un satellite ;

[Fig 2] la figure 2 illustre les différentes étapes d'un hand-over entre deux satellites ;

[Fig 3] la figure 3 illustre une charge utile du satellite de la figure 1 comportant un dispositif de pré-compensation selon un premier mode de réalisation de l'invention ;

[Fig 4] la figure 4 illustre une charge utile du satellite de la figure 1 comportant un dispositif de pré-compensation selon un second mode de réalisation de l'invention ;

[Fig 5] la figure 5 illustre un calcul d'un vecteur de direction du terminal mobile de la figure 1 ;

[Fig 6] la figure 6 illustre un calcul de vecteur de direction du satellite de la figure 1 ;

[Fig 7] la figure 7 illustre une projection du vecteur de direction de la figure 6 dans un repère de l'antenne du satellite de la figure 1 ;

Fig 8] la figure 8 illustre une combinaison d'un précoding et d'une pré-compensation réalisée selon la figure 3 ou la figure 4, par une charge utile du satellite de la figure 1.

L'invention n'est pas limitée aux modes de réalisation et variantes présentées et d'autres modes de réalisation et variantes apparaîtront clairement à l'homme du métier.

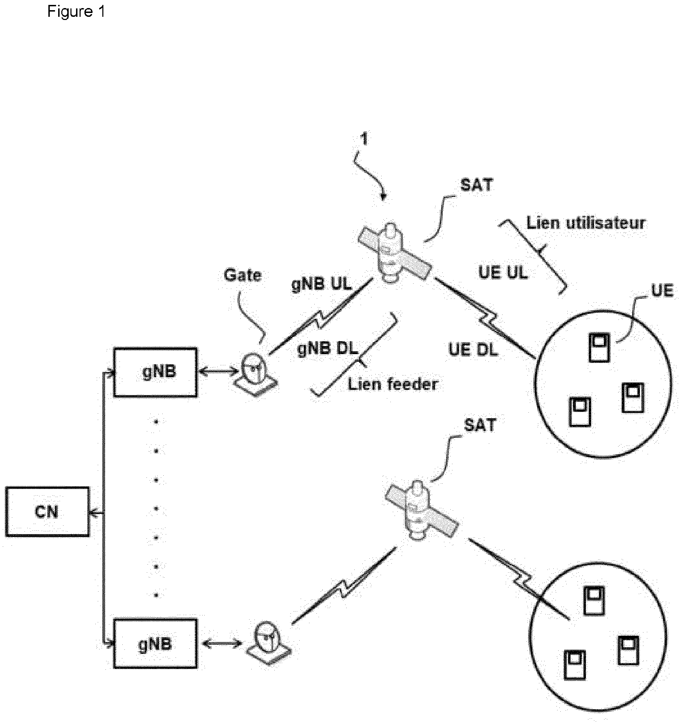

La figure 1 illustre un système de communication 1 pour une communication 5G entre un réseau central CN et un terminal mobile UE. Le réseau central CN permet une interconnexion avec différent fournisseurs de service. Il comprend une pluralité de routeurs et de commutateurs qui permettent de fournir des fonctions d'agrégation, d'authentification, de contrôle, de facturation, d'invocation de service et/ou de passerelles. Le terminal mobile UE est adapté pour recevoir et échanger des trames de service, plus particulièrement, ces trames de service peuvent être des trames de service montantes UE UL émises par le téléphone mobile UE ou des trames de services descendantes UE DL reçues par ce téléphone mobile UE. Les trames de service montantes UE UL sont alignées temporellement avec les trames de service descendantes UE DL.

Le système de communication 1 comprend :

- au moins un satellite SAT ;
- une pluralité de passerelles Gâte ;
- une pluralité de stations de base gNB formant un réseau d'accès.

Le satellite SAT est adapté pour émettre des trames de service descendantes UE DL à destination du téléphone mobile UE. Le satellite SAT est également adapté pour recevoir des trames de service montantes UE UL émises par l'équipement mobile UE. Les trames de service montantes UE UL et les trames de service descendantes UE DL utilisent, par exemple, une bande de fréquence allant de 2 GHz à 4 GHz (bande S). En variante, les trames de service montantes UE UL et les trames de services descendantes UE DL utilisent les fréquences de la bande C. D'autres bandes de fréquence peuvent être également utilisées, telles que la bande L (1,5-1,7 GHz), ou des bandes MS (cellulaires-terrestres). Le satellite SAT est également adapté pour gérer des trames lien feeder échangées avec les stations de base gNB. Ces trames lien feeder comprennent des trames lien feeder montantes gNB UL émises par les stations de base gNB en direction du satellite SAT et des trames lien feeder descendantes gNB DL émises par le satellite SAT en direction des stations de base gNB. Les trames lien feeder utilisent la bande Ka via un protocole de type eCPRI/ORAN (pour « enhanced Common Public Radio Interface » en anglais et pour « Open Radio Access Network » en anglais). En variante, les trames lien feeder utilisent les bandes Q/V ou la bande C. Le satellite SAT est ainsi à l'interface entre les trames lien feeder et les trames de service ce qui permet à des données d'être véhiculées par des trames lien feeder entre les stations de base gNB et le satellite SAT puis par des trames de service entre le satellite SAT et le téléphone mobile UE. Le satellite SAT est, par exemple, un satellite défilant sur une orbite non-géostationnaire dit satellite NGSO (pour « Non-Geostationary Orbit » en anglais), tel qu'un satellite LEO (pour « Low-Earth Orbit » en anglais), vLEO (pour « very Low-Earth Orbit » en anglais) ou MEO (pour « Medium-Earth Orbit » en anglais). Le point de référence de ce satellite se déplace par rapport aux stations de base gNB et ce délai est grandement variable, par exemple il peut être compris entre 2 et 5 ms avec une vitesse de variation pouvant atteindre jusqu'à 25ppm dans le cas où le satellite est sur une orbite à 600 km.

Les stations de base gNB sont adaptées pour émettre des trames de lien feeder montantes gNB UL et pour recevoir des trames lien feeder descendantes gNB DL. Chaque station de base gNB est composée d'une unité centrale CU (pour « Central Unit » en anglais), d'une unité distribuée DU (pour « Distributed Unit ») pour une bande de base et d'une unité radio RU (pour « Radio Unit »).

Les passerelles Gate sont disposées entre les stations de base gNB et le satellite SAT. Elles permettent de rendre possible une communication entre l'environnement filaire des stations de base gNB et l'environnement radio associé au satellite SAT.

L'architecture d'une charge utile CU comprend la fonctionnalité Radio Unit (RRU) à bord du satellite SAT. La charge utile CU est connectée à un réseau numérique distribué de formation de faisceaux pour les trames de service descendantes UE DL vers le terminal mobile UE. Cette charge utile CU est également reliée à la passerelle Gate qui assure la connectivité vers des modems gérant les trames lien feeder descendantes gNB DL vers les stations de base gNB. Dans ce cas, les signaux numériques à émettre dans les différents faisceaux formés par l'antenne sont transportés via le protocole eCPRI/ORAN, par exemple suivant la norme ORAN, depuis/vers les stations de base gNB ou entre les satellites SAT à travers les ISLs. L'architecture de la charge utile CU correspond à une découpe fonctionnelle « split 7-2/7-2x7-3 ». La fonction RU est chargée de convertir les signaux du gNB (en général des données numériques sous forme I/Q, véhiculées en CPRI ou eCPRI) en signaux de l'interface radio 5G avec le terminal mobile UE. Les données des différents faisceaux sont multiplexés sur le lien feeder et la charge utile CU fait le multiplexage/demultiplexage pour les émettre/recevoir dans les faisceaux correspondants sur le lieu utilisateur Uu entre le satellite SAT et le terminal mobile UE.

L'invention propose de réaliser l'architecture d'une charge utile CU où la fonction RU est placée dans le satellite, donc loin du gNB, tout en étant capable de gérer un délai important et variable entre le satellite et gNB, ce qui n'est pas le cas des équipements 5G terrestres actuels.

Le téléphone mobile UE appartient à une cellule 5G faisant partie d'une pluralité de cellules 5G. En se déplaçant, l'utilisateur utilisant le téléphone mobile UE peut passer d'une cellule 5G à une autre.

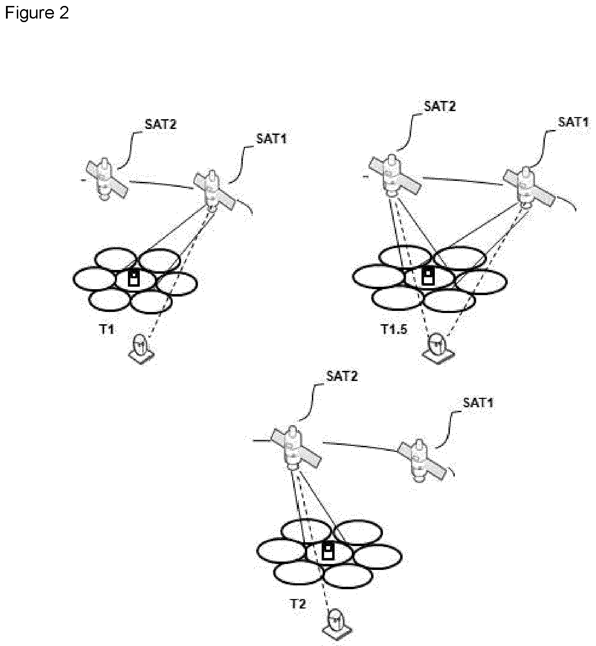

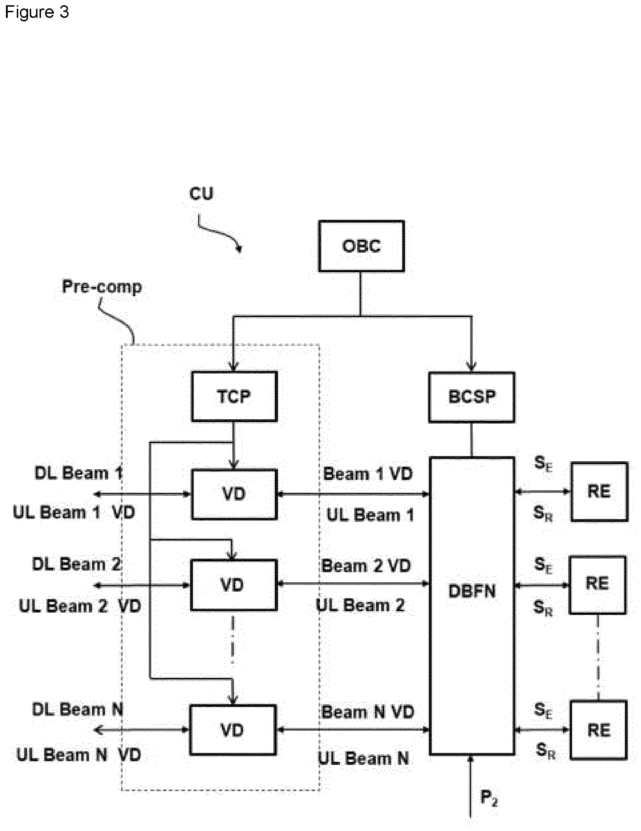

Lorsque deux satellites SAT 1, SAT 2 survolent successivement une même cellule 5G comprenant le téléphone mobile UE, il est nécessaire de réaliser un transfert de relais (hand-over) entre ces deux satellites SAT 1, SAT 2 pour assurer la continuité du faisceau principal. Dans un premier temps T1, illustré sur la partie gauche de la figure 3, le premier satellite SAT 1 dessert la cellule 5G. Dans un second temps T1.5, illustré sur la partie centrale de la figure 2, le premier satellite SAT 1 et le second satellite SAT 2 desservent tous les deux la cellule 5G. Un transfert de relais peut alors débuter entre le premier satellite SAT 1 et le second satellite SAT 2. Dans troisième temps T2, le transfert de relais est réalisé et seul le second satellite SAT 2 dessert la cellule 5G. La cellule 5G va donc osciller entre deux satellites différents. Etant donné que la cellule 5G est une cellule fixe, le transfert de relais est assez simple à gérer. Le changement de satellites se fait progressivement évitant un taux de de transfert de relais difficilement supportable pour le réseau central CN et la station de base gNB.

La figure 3 illustre une charge utile CU du satellite SAT, selon un premier mode de réalisation de l'invention.

Cette charge utile comprend :

- un ordinateur de bord OBC ;
- un processeur d'orientation de faisceau principal BCSP ;
- une pluralité d'éléments rayonnants RE ;
- un étage numérique DBFN ;
- un dispositif de pré-compensation Pre-comp.

L'ordinateur de bord OBC est adapté pour obtenir des paramètres du satellite SAT, tels que la position, la vitesse et l'accélération de ce satellite.

Le processeur d'orientation de faisceau principal BCSP est adapté pour orienter un faisceau principal en fonction des paramètres du satellite, dans le but de viser le centre de la cellule 5G.

Chaque élément rayonnant de la pluralité d'éléments rayonnants RE est adapté pour émettre, selon un mode descendant DL, un signal d'émission $S_E$ en direction de la cellule 5G cible. Le signal d'émission $S_E$ à émettre par l'élément rayonnant RE a été préalablement transmis par l'étage numérique DBFN. En outre, chaque élément rayonnant de la pluralité d'éléments rayonnants RE est adapté pour recevoir, selon un mode ascendant UL, un signal de réception $S_R$ provenant de la cellule 5G cible. Le signal de réception $S_R$ reçu par l'élément rayonnant est transmis par la suite à l'étage numérique DBFN.

L'étage numérique DBFN est adapté pour émettre les différents signaux d'émission $S_E$ vers les éléments rayonnants RE selon le mode descendant DL. L'ensemble des signaux d'émission $S_E$ forment un faisceau principal selon le mode descendant. De la même manière, l'étage numérique DBFN est adapté pour recevoir les différents signaux de réception $S_R$ venant des éléments rayonnants RE. L'ensemble des signaux d'émission $S_E$ forment un faisceau principal selon le monde ascendant.

Le dispositif de pré-compensation Pre-comp est adapté pour compenser des écarts temporels dans l'échange des trames lien feeder gNB UL, gNB DL en vue d'aligner temporellement les trames de service montantes UE UL et les trames de service descendantes UE DL. Plus particulièrement, le dispositif de pré-compensation Pre-comp comprend :

- un processeur de compensation temporel TCP ;
- un module de délai variable VD, pour chaque faisceau secondaire entrant DL Beam 1, DL Beam 2, DL Beam 3, respectivement pour chaque faisceau secondaire sortant UL Beam 1, UL Beam 2, UL Beam 3. Le module de délai variable est adapté pour fournir un faisceau secondaire entrant DL décalé temporellement d'une valeur prédéfinie par le processeur de compensation temporel TCP. De la même manière, chaque faisceau secondaire sortant UL Beam 1 VD, UL Beam 2 VD, UL Beam N VD est décalé par rapport à un faisceau secondaire sortant UL Beam 1, UL Beam 2, UL Beam N provenant de l'étage numérique DBFN.

Le processeur de compensation temporel TCP est adapté pour calculer le temps $\Delta t_{SAT}$ entre le satellite SAT et le centre O de la cellule 5G adressée à partir de la position et de la vitesse de ce satellite.

Ainsi, nous avons :

$$\Delta t_{SAT} = \frac{|\vec{d}|}{c}$$

$$\Delta t_{SAT} = \frac{\sqrt{(P_x^{SAT} - P_x^{CELL_i})^2 + (P_y^{SAT} - P_y^{CELL_i})^2 + (P_z^{SAT} - P_z^{CELL_i})^2}}{c}$$

A chaque slot (1 ms), la compensation est mise à jour.

Basée sur une FIFO (pour « First In, First Out » en anglais) régulée par les variations de timing :

- quand le timing grandit, la FIFO se vide progressivement pour compenser l'augmentation du délai ;
- quand le timing diminue, la FIFO se remplit progressivement pour compenser la diminution du délai.

Tout cela permet que $\Delta t_{UE} = \Delta t_{SAT} + \Delta t_{FIFO}$ reste constant afin de masquer les variations de $\Delta t_{SAT}$. La FIFO doit être dimensionné de sorte que $\Delta t_{FIFO\_MAX} = \Delta t_{SAT\_MAX} - \Delta t_{SAT\_MIN}$.

L'étage numérique DBFN est adapté pour former un faisceau principal à partir des faisceaux secondaires sortant UL Beam 1 VD, UL Beam 2 VD,..., UL Beam N VD. Pour cela, l'étage numérique DBFN détermine une direction du faisceau principal à partir des paramètres du satellite (position, vitesse, accélération) et du centre O de la cellule 5G. Ces paramètres du satellite et le centre O de la cellule 5G sont fournis par le processeur d'orientation de faisceau principal BCSP.

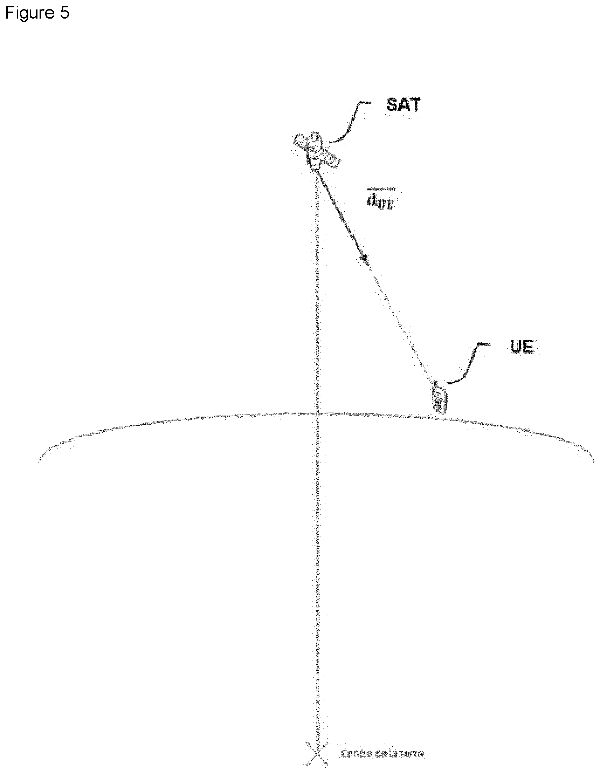

Comme il est illustré sur la figure 5, le vecteur de direction $\overrightarrow{d_{UE}}$ du terminal mobile UE est déterminé selon l'équation suivante :

$$\overrightarrow{d_{UE}} = (P_x^{CELL_i} - P_x^{SAT}, P_y^{CELL_i} - P_y^{SAT}, P_z^{CELL_i} - P_z^{SAT})$$

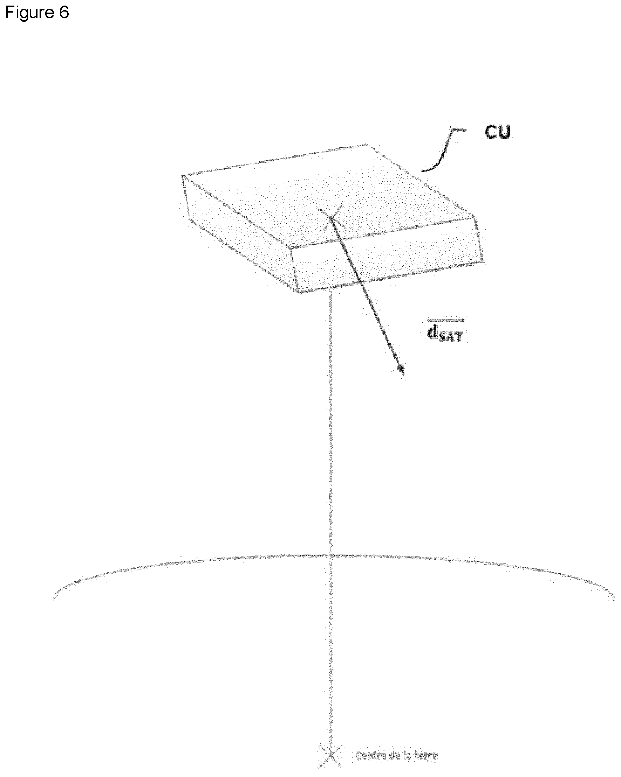

La figure 6 illustre le vecteur de direction $\overrightarrow{d_{SAT}}$ du satellite SAT.

$\overrightarrow{d_{SAT}}$ est la direction de la normale de l'antenne par rapport à un repère centre-terre, comme $\overrightarrow{d_{UE}}$. Comme pour la formation de faisceaux, l'important est direction $\vec{d}$ par rapport à la normale de l'antenne. Il faut mettre le vecteur $\overrightarrow{d_{UE}}$ dans le repère de l'antenne satellite.

Ainsi, $\vec{d} = \overrightarrow{d_{UE}} - \overrightarrow{d_{SAT}}$

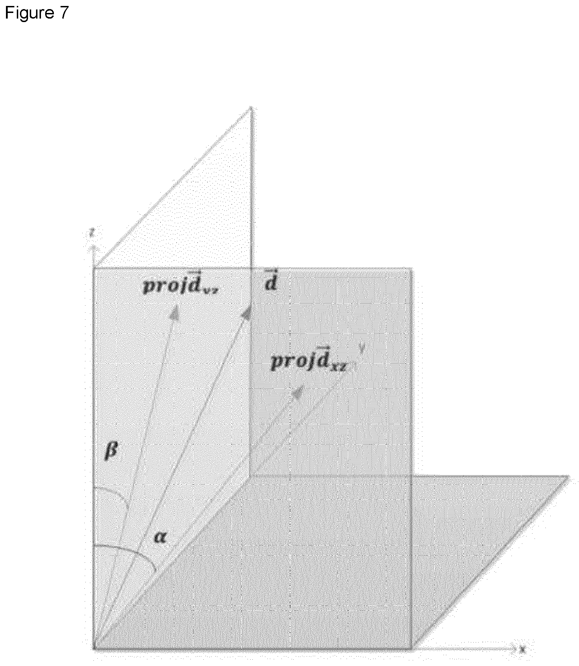

La figure 7, illustre une projection du vecteur de direction $\overrightarrow{d_{SAT}}$ dans un repère de l'antenne du satellite.

Il est d'abord déterminé deux angles à partir de la normale de l'antenne :

$\alpha$ qui est l'angle entre la normale de l'antenne (axe Z) et la projection de $\vec{d}$ sur le plan (xy) appelé $proj\vec{d}_{xy}$ ;

$\beta$ qui est l'angle entre la normale de l'antenne (axe Z) et la projection de $\vec{d}$ sur le plan (xy) appelé $\vec{d}_{yz}$ .

Nous partons ici du centre du vecteur de direction cellulaire.

La direction par rapport à la normale du panneau DRA (pour « Direct Radiating Antenna », en anglais) permet de déterminer des lois de phase à appliquer pour former le faisceau qui éclairera la cellule 5G. Ce panneau DRA est porté par une antenne rectangulaire comprenant l'ensemble des éléments rayonnants RE.

Grâce aux deux angles $\alpha$, $\beta$, il est désormais possible de calculer les angles de direction de l'antenne rectangulaire à l'aide de l'algorithme suivant :

Soit S la distance entre le centre des éléments rayonnants consécutifs dans les deux axes de l'antenne (x et y) ;

Soit $N_x^{RE}$ le nombre d'éléments rayonnants dans l'axe x ;

Soit $N_y^{RE}$ le nombre d'éléments rayonnants dans l'axe y ;

Soit $\lambda$ la longueur d'onde du signal à former.

Des premiers poids sont déterminés de la façon suivante à partir de données provenant du dispositif de pré-compensation Pre-comp :

$$\text{for } k_x=0 \text{ to } N_x^{RE} - 1$$

$$\text{for } k_y=0 \text{ to } N_y^{RE} - 1$$

$$d_x = k_x . S$$

$$d_y = k_y . S$$

$$W_{x,y} = e^{-2\pi . \frac{i}{\lambda} . (\sin(\beta).\cos(\alpha).d_x + \sin(\beta).\sin(\alpha).dy)}$$

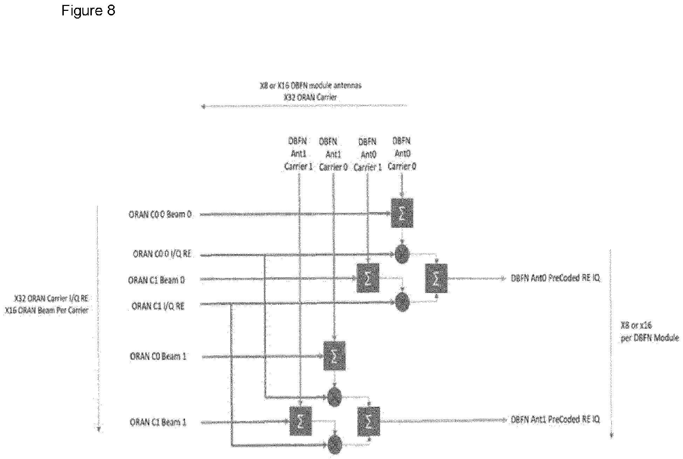

Les poids de formation qui sont calculés par le mécanisme de pré-compensation doivent être combinés avec des seconds poids $P_2$. Ces seconds poids $P_2$ sont obtenus par une unité distribuée de la station de base gNB. L'étape de pondération entre les faisceaux secondaires permettant de combiner ces poids entre la pré-compensation et les informations pour la partie descendante, est illustrée à la figure 8.

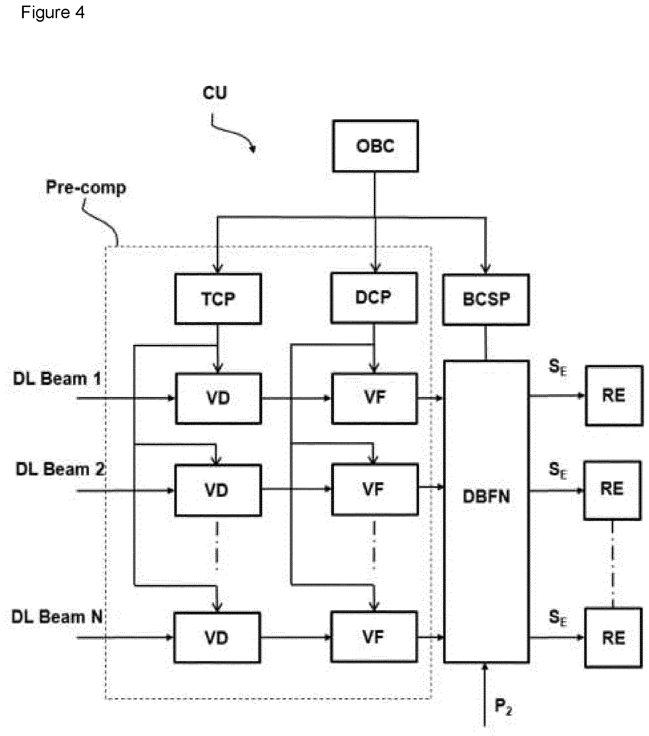

La figure 4 illustre une charge utile CU du satellite SAT, selon un second mode de réalisation de l'invention.

Le fonctionnement de la charge utile CU est ici présenté selon un mode descendant DL. Ce fonctionnement est bien entendu transposable au mode ascendant UL.

Outre les éléments du module de pré-compensation divulgués à la figure 4, le module de pré-compensation de la figure 5 comprend en outre :

- un processeur de compensation Doppler DCP ;
- N modules de dérive à fréquence variable VF.

Le dispositif de pré-compensation Pre-comp est ainsi adapté pour compenser des écarts temporels et des écarts fréquentiels dans l'échange des trames lien feeder gNB UL, gNB DL en vue d'aligner temporellement les trames de service montantes UE UL et les trames de service descendantes UE DL.

Le processeur DCP est adapté pour déterminer une valeur de décalage en fréquence, dit dérive de fréquence. Cette valeur est alors transmise aux différents modules de dérive à fréquence variable VF. Chaque module de dérive à fréquence variable VF est adapté pour fournir à l'étage numérique DBFN, un faisceau secondaire entrant DL décalé en fréquence à partir d'un faisceau préalablement décalé temporellement par un des modules de délai variable VD. Dès lors, chaque faisceau secondaire DL Beam 1, DL Beam 2, ..., DL Beam N, entrant est traité par un des modules de délai variable VD et un des modules à fréquence variable VF avant d'atteindre l'étage numérique DBFN.

Grâce à la vitesse et à l'accélération du satellite, la dérive de fréquence et un taux de dérive sont calculés à partir de :

- la position, la vitesse et l'accélération du satellite ;
- une fréquence centrale du faisceau principal ;
- la position du centre de la cellule à compenser ;

A chaque tranche (1ms), la compensation est mise à jour.

La première étape consiste alors à effectuer une projection de vitesse satellite et d'accélération dans la direction du centre de la cellule.

$$\vec{d} = (P_x^{CELL_i} - P_x^{SAT}, P_y^{CELL_i} - P_y^{SAT}, P_z^{CELL_i} - P_z^{SAT})$$

$$proj\overrightarrow{v_d} = \frac{\vec{v}.\vec{d}}{|\vec{d}|^2}$$

$$proj\overrightarrow{a_d} = \frac{\vec{a}.\vec{d}}{|\vec{d}|^2}$$

Le doppler et la variation du doppler peuvent être calculées de la façon suivante :

$$f_d = proj\overrightarrow{v_d}.\frac{f}{c}$$

$$\Delta f_d = proj\overrightarrow{a_d}.\frac{f}{c}$$

Un décalage et une vitesse de changement de la fréquence de signe opposé est alors appliqué au signal afin de pré-compenser cette dérive.

L'invention permet d'apporter ainsi les avantages suivants :

La pré-compensation permet le recours à des terminaux mobiles sans modification de leur comportement qui les rendraient incompatibles de la future release 17 de la 5G NR ;
La pré-compensation se fait sur la base du centre de la cellule, à la fois en mode descendant et en mode ascendant ;
Les cellules au sol sont fixes ce qui réduit les besoins de transformation logique/physique au niveau du réseau central CN et du terminal mobile ;
Le satellite et en particulier l'étage numérique DBFN forment les faisceaux afin de toujours viser la cellule qui recouvre une région fixe au sol.

Seuls la station de base gNB et le satellite doivent être modifiés limitant l'impact des modifications apportées au système de communication.

La solution proposée en introduisant à la fois de pré-compensations pour les terminaux ainsi que des couches d'abstraction avec le réseau central permet d'utiliser des terminaux du commerce et des équipements de réseau central du commerce.

## Revendications

1. Procédé de pré-compensation d'écarts temporels pour aligner temporellement des trames de service montantes (UE UL) et des trames de service descendantes (UE DL), lesdites trames de service montantes (UE UL) et lesdites trames de service descendantes (UE DL) étant échangées entre un satellite (SAT) et un terminal mobile (UE) dans un faisceau principal, ledit terminal mobile (UE) étant adapté pour réaliser des communications 5G, ledit procédé de pré-compensation étant **caractérisé en ce que** le terminal mobile (UE) appartenant à une cellule 5G comportant un centre de cellule (O), la pré-compensation est calculée sur la base d'un faisceau principal dirigé vers le centre (O) de ladite cellule 5G.

2. Procédé de pré-compensation selon la revendication 1, dans lequel ladite pré-compensation est réalisée sur les trames de service descendantes (UE DL) et/ou sur les trames de service montantes (UE UL).

3. Procédé de pré-compensation selon l'une quelconque des revendications 1 ou 2, dans lequel la pré-compensation est calculée à partir d'une position, d'une vitesse et/ou d'une accélération du satellite (SAT).

4. Procédé de pré-compensation selon l'une quelconque des revendications 1 à 3, dans lequel ladite pré-compensation est une pré-compensation Doppler permettant de compenser des écarts en fréquence.

5. Procédé de pré-compensation selon la revendication 4, dans lequel l'étape de pré-compensation Doppler est calculée à partir d'au moins un paramètre d'une liste de paramètres comprenant :

- une position du satellite ;
- une vitesse du satellite ;
- une accélération du satellite ;
- une fréquence centrale ;
- la position du centre de la cellule.

6. Dispositif de pré-compensation pour la compensation d'écarts temporels pour aligner temporellement des trames de service montantes (UE UL) et des trames de service descendantes (UE DL), lesdites trames de service montantes (UE UL) et lesdites trames de service descendantes (UE DL) étant échangées entre un satellite (SAT) et un terminal mobile (UE), ledit terminal mobile (UE) étant adapté pour réaliser des communications 5G avec le réseau d'accès, ledit procédé de pré-compensation étant **caractérisé en ce que** le terminal mobile (UE) appartenant à une cellule 5G comportant un centre de cellule (O), la pré-compensation est calculée sur la base d'un faisceau principal dirigé vers le centre (O) de ladite cellule 5G.

7. Charge utile d'un satellite (SAT) comportant un dispositif de pré-compensation selon la revendication 6.

8. Système de communication (1) pour une communication 5G entre au moins un terminal mobile (UE) et un réseau d'accès comprenant une pluralité de stations de base (gNB), ledit système de communication (1) comprenant au moins un satellite (SAT), au moins une station de base de la pluralité de stations de base (gNB) et une passerelle (Gate) disposée entre ledit satellite (SAT) et ladite station de base (gNB), ledit satellite (SAT) et ladite passerelle (Gate) étant aptes à échanger des trames lien feeder (gNB UL, gNB DL), ledit terminal mobile (UE) et ledit satellite (SAT) étant aptes à échanger des trames de service (UE UL, UE DL) dans un faisceau principal, ledit satellite (SAT) étant à l'interface entre les trames lien feeder (gNB UL, gNB DL) et les trames de service (UE UL, UE DL) pour l'échange de données entre le terminal mobile (10) et la station de base (gNB), les dites trames de service (UE UL, UE DL) comprenant des trames de service montantes (UE UL) et des trames de service descendantes (UE DL), lesdites trames de service montantes (UE UL) devant être alignées temporellement avec lesdites trames de service descendantes (UE DL), ledit système de communication étant **caractérisé en ce que** qu'il comporte un dispositif de pré-compensation adapté pour compenser des écarts temporels pour aligner temporellement les trames de service montantes (UE UL) et les trames de service descendantes (UE DL) et dans lequel le terminal mobile (UE) appartenant à une cellule 5G comportant un centre de cellule (O), la pré-compensation est calculée sur la base d'un faisceau principal dirigé vers le centre (O) de ladite cellule 5G.

Figure 1

Figure 2

Figure 3

Figure 4

Figure 5

Figure 6

Figure 7

Figure 8

Europäisches Patentamt

European Patent Office

Office européen des brevets

# RAPPORT DE RECHERCHE EUROPEENNE

Numéro de la demande

EP 22 21 1606

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | WO 2020/075044 A1 (ERICSSON TELEFON AB L M [SE]) 16 avril 2020 (2020-04-16) * alinéas [0042] – [0068] * ----- | 1-8 | INV. H04B7/185 H04W56/00 |
| Y | US 2019/238216 A1 (AVELLAN ABEL [US] ET AL) 1 août 2019 (2019-08-01) * alinéas [0070] – [0083] * ----- | 1-8 | |
| A | US 2018/013484 A1 (VASAVADA YASH [IN] ET AL) 11 janvier 2018 (2018-01-11) * alinéas [0042] – [0054] * ----- | 1-8 | |
| A | WO 2020/089471 A1 (ERICSSON TELEFON AB L M [SE]) 7 mai 2020 (2020-05-07) * pages 10-21 * ----- | 1-8 | |
| A | US 2016/278033 A1 (WU QIANG [US] ET AL) 22 septembre 2016 (2016-09-22) * alinéas [0071] – [0077] * ----- | 1-8 | |
| A | DE GAUDENZI RICCARDO ET AL: "Future technologies for very high throughput satellite systems", INTERNATIONAL JOURNAL OF SATELLIT COMMUNICATIONS AND NETWORKING , vol. 38, no. 2 15 octobre 2019 (2019-10-15), pages 141-161, XP055918034, GB ISSN: 1542-0973, DOI: 10.1002/sat.1327 Extrait de l'Internet: URL:https://onlinelibrary.wiley.com/doi/full-xml/10.1002/sat.1327 * Section 3.2 * ----- | 1-8 | DOMAINES TECHNIQUES RECHERCHES (IPC) H04B H04W |

-/--

Le présent rapport a été établi pour toutes les revendications

| Lieu de la recherche | Date d'achèvement de la recherche | Examinateur |
|---|---|---|
| La Haye | 28 mars 2023 | Esbri, Oriol |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

page 1 de 2

**RAPPORT DE RECHERCHE EUROPEENNE**

Numéro de la demande

EP 22 21 1606

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | CA 3 003 667 A1 (MICHAELS PARIS [AU]) 4 mai 2017 (2017-05-04) * alinéas [0018] – [0023] * * alinéas [0040] – [0058] * ----- | 1-8 | |
| A | US 2021/297147 A1 (QAISE OMAR QAIS TALIB [DE] ET AL) 23 septembre 2021 (2021-09-23) * alinéas [0133] – [0216] * ----- | 1-8 | |
| A | WO 2021/033085 A1 (ERICSSON TELEFON AB L M [SE]) 25 février 2021 (2021-02-25) * alinéas [0015] – [0090] * ----- | 1-8 | |
| A | WO 2021/062666 A1 (ZTE CORP [CN]) 8 avril 2021 (2021-04-08) * pages 40-44 * ----- | 1-8 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| La Haye | 28 mars 2023 | Esbri, Oriol |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

page 2 de 2

**ANNEXE AU RAPPORT DE RECHERCHE EUROPEENNE
RELATIF A LA DEMANDE DE BREVET EUROPEEN NO.**

**EP 22 21 1606**

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

**28-03-2023**

| Document brevet cité au rapport de recherche | Date de publication | Membre(s) de la famille de brevet(s) | Date de publication |
|---|---|---|---|
| WO 2020075044 A1 | 16-04-2020 | BR 112021006648 A2 | 13-07-2021 |
| | | CN 113169795 A | 23-07-2021 |
| | | EP 3864769 A1 | 18-08-2021 |
| | | US 2021399797 A1 | 23-12-2021 |
| | | WO 2020075044 A1 | 16-04-2020 |
| US 2019238216 A1 | 01-08-2019 | US 2019238216 A1 | 01-08-2019 |
| | | US 2021218468 A1 | 15-07-2021 |
| US 2018013484 A1 | 11-01-2018 | BR 112016021569 A2 | 03-07-2018 |
| | | CA 2970923 A1 | 24-09-2015 |
| | | EP 3120466 A1 | 25-01-2017 |
| | | MX 357494 B | 11-07-2018 |
| | | US 2015270890 A1 | 24-09-2015 |
| | | US 2018013484 A1 | 11-01-2018 |
| | | WO 2015143252 A1 | 24-09-2015 |
| WO 2020089471 A1 | 07-05-2020 | EP 3874621 A1 | 08-09-2021 |
| | | US 2022038139 A1 | 03-02-2022 |
| | | WO 2020089471 A1 | 07-05-2020 |
| US 2016278033 A1 | 22-09-2016 | BR 112017020107 A2 | 29-05-2018 |
| | | CN 107408978 A | 28-11-2017 |
| | | EP 3272032 A1 | 24-01-2018 |
| | | JP 2018512786 A | 17-05-2018 |
| | | KR 20170129747 A | 27-11-2017 |
| | | US 2016278033 A1 | 22-09-2016 |
| | | WO 2016153823 A1 | 29-09-2016 |
| CA 3003667 A1 | 04-05-2017 | AU 2016347539 A1 | 21-06-2018 |
| | | CA 3003667 A1 | 04-05-2017 |
| | | GB 2571592 A | 04-09-2019 |
| | | PH 12018550072 A1 | 28-01-2019 |
| | | US 2018241464 A1 | 23-08-2018 |
| | | WO 2017072745 A1 | 04-05-2017 |
| US 2021297147 A1 | 23-09-2021 | EP 3864768 A1 | 18-08-2021 |
| | | EP 3907904 A1 | 10-11-2021 |
| | | EP 3907905 A1 | 10-11-2021 |
| | | EP 3934127 A1 | 05-01-2022 |
| | | EP 3944518 A1 | 26-01-2022 |
| | | EP 4075685 A1 | 19-10-2022 |
| | | US 2021297147 A1 | 23-09-2021 |
| | | US 2021328661 A1 | 21-10-2021 |
| | | US 2021328662 A1 | 21-10-2021 |
| | | US 2022060252 A1 | 24-02-2022 |

EPO FORM P0460

Pour tout renseignement concernant cette annexe : voir Journal Officiel de l'Office européen des brevets, No.12/82

**page 1 de 2**

**ANNEXE AU RAPPORT DE RECHERCHE EUROPEENNE
RELATIF A LA DEMANDE DE BREVET EUROPEEN NO.**

**EP 22 21 1606**

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

**28-03-2023**

| Document brevet cité au rapport de recherche | Date de publication | Membre(s) de la famille de brevet(s) | | Date de publication |
|---|---|---|---|---|
| | | US | 2022060253 A1 | 24-02-2022 |
| | | WO | 2020074747 A1 | 16-04-2020 |
| WO 2021033085 A1 | 25-02-2021 | EP | 4014363 A1 | 22-06-2022 |
| | | US | 2022286198 A1 | 08-09-2022 |
| | | WO | 2021033085 A1 | 25-02-2021 |
| WO 2021062666 A1 | 08-04-2021 | CN | 114503697 A | 13-05-2022 |
| | | EP | 4042757 A1 | 17-08-2022 |
| | | JP | 2022549939 A | 29-11-2022 |
| | | US | 2022217790 A1 | 07-07-2022 |
| | | WO | 2021062666 A1 | 08-04-2021 |

EPO FORM P0460

Pour tout renseignement concernant cette annexe : voir Journal Officiel de l'Office européen des brevets, No.12/82

**page 2 de 2**